# EUROPÄISCHE PATENTSCHRIFT

(11) **EP 2 483 445 B1**
(45) Veröffentlichungstag und Bekanntmachung des Hinweises auf die Patenterteilung: **29.10.2014**
(21) Anmeldenummer: 10754482.7
(22) Anmeldetag: 14.09.2010
(51) Int. Cl.: C23C 24/04, F24J 2/07, F24J 2/46, F24J 2/48

(54) **ZENTRALROHR FÜR EIN LINEAR KONZENTRIERENDES SOLARTHERMISCHES KRAFTWERK MIT ABSORBERSCHICHT SOWIE VERFAHREN ZUM AUFBRINGEN DIESER ABSORBERSCHICHT**
CENTRAL TUBE WITH ABSORBER LAYER FOR LINEARLY CONCENTRATING SOLAR THERMAL POWER PLANT AND METHOD OF DEPOSITING THE ABSORBER LAYER
TUBE CENTRAL AVEC COUCHE ABSORBANTE POUR CENTRALE THERMIQUE SOLAIRE À FOCALISATION LINÉAIRE ET PROCÉDÉ DE DÉPÔT DE LA COUCHE ABSORBANTE

(30) Priorität: 30.09.2009 DE 102009048672
(43) Veröffentlichungstag der Anmeldung: 08.08.2012
(73) Patentinhaber: Siemens Aktiengesellschaft, 80333 München (DE)
(72) Erfinder: KRÜGER, Ursus, 14089 Berlin (DE); REZNIK, Daniel, 13503 Berlin (DE); STIER, Oliver, 12163 Berlin (DE)
(86) Internationale Anmeldenummer: PCT/EP2010/063441
(87) Internationale Veröffentlichungsnummer: WO 2011/039051

(56) Entgegenhaltungen:
- EP-A1- 0 015 487
- WO-A2-2009/056235
- DE-A1- 2 725 914
- DE-A1- 19 743 428
- DE-A1-102007 053 959
- GB-A- 2 436 360
- HARDING G L ET AL: "Magnetron-sputtered metal carbide absorbing surfaces", JOURNAL OF VACUUM SCIENCE AND TECHNOLOGY, Bd. 16, Nr. 3, Mai 1979 (1979-05), Seiten 857-862, XP002613087, AVS Science & Technology Society [US] ISSN: 0022-5355, DOI: 10.1116/1.570100

## Beschreibung

Die Erfindung betrifft ein Verfahren zum Aufbringen einer Absorberschicht auf ein Zentralrohr für ein linear konzentrierendes solarthermisches Kraftwerk. Weiterhin betrifft die Erfindung ein Zentralrohr für ein linear konzentrierendes solarthermisches Kraftwerk mit einer Absorberschicht.

Linear konzentrierende solarthermische Kraftwerke sind allgemein bekannt. Sie können als Parabolrinnenkraftwerk ausgeführt sein. Diese weisen Parabolrinnenkollektoren auf, die einen nach oben geöffneten parabolischen Querschnitt haben, so dass Sonnenlicht einfallen kann. Die Sonnenstrahlen werden von der Innenfläche der Rinne reflektiert und treffen auf ein Zentralrohr, in dem ein wärmespeicherndes Fluid zirkuliert (beispielsweise ein Öl oder eine Salzschmelze). Das Wärmeübertragungsmedium im Zentralrohr führt die Wärme beispielsweise einer thermischen Stromgewinnung zu. Es können alternativ auch Fresnel-Kollektoren zu Einsatz kommen, bei denen das Sonnenlicht statt mit einem Parabolspiegel mit einer Fresnel-Linse gesammelt wird. Im Folgenden werden die konzentrierenden solarthermischen Kraftwerke auch kurz als Solarkraftwerke bezeichnet. Weiter ist zu bemerken, dass der Begriff Kraftwerk im weitesten Sinne zu verstehen ist. Mit den vorstehend aufgeführten Kollektoren können nicht nur Wärmekraftmaschinen wie Turbinen ausgestattet werden, sondern die im wärmespeichernden Medium gespeicherte Wärme kann auch direkt genutzt werden.

Damit ein möglichst hoher Wirkungsgrad des Solarkraftwerkes erreicht wird, muss ein möglichst großer Teil der Solarenergie in das Wärmeübertragungsmedium eingespeist werden. Zu diesem Zweck wird das Zentralrohr mit einer spektral selektiven Absorberschicht versehen, welche einen möglichst hohen solaren Absorptionsgrad α und einen möglichst geringen thermischen Emissionsgrad ε aufweist. Zur effizienten Wandlung solarer Lichtenergie in thermische Energie sollten die Absorberschichten im allgemeinen einen großen solaren Absorptionsgrad α und einen kleinen thermischen Emissionsgrad ε bei der jeweiligen Betriebstemperatur haben. Spektral selektive Absorberschichten sind daher gekennzeichnet durch eine niedrige Reflektivität (ρ ≈ 0) für Wellenlängen λ unter 2 µm und eine große Reflektivität (ρ ≈ 1) für Wellenlängen λ über 2 µm. Daher besteht ein Bedarf an einfach und kostengünstig herzustellenden spektral selektiven Absorberschichten für linear konzentrierende solarthermische Kraftwerke, die bei Temperaturen um bzw. über 500°C an der Luft chemisch und thermisch stabil sind. Eine ideale Absorberschicht hätte einen solaren Absorptionsgrad α ≥ 0.98 und einen thermischen Emissionsgrad ε ≤ 0.05 bei mindestens 500°C. Für einen Betrieb bei sogenannten mittleren Temperaturen wird in der technisch gebräuchlichen Umsetzung von Absorberschichten ein solarer Absorptionsgrad α > 0.85 und ein thermischer Emissionsgrad ε < 0.15 bei 400°C angestrebt. Die Beständigkeit der Absorberschicht an Luft unter solchen Betriebsbedingungen ist ein weiteres wesentliches Ziel, da sie eine heute noch vorherrschende, konstruktiv aufwendige und teure Vakuumkapselung der Zentralrohre in Parabolrinnenkollektoren überflüssig macht.

Es kann daher sinnvoll sein, auch kleinere solare Absorptionsgrade α und/oder größere thermische Emissionsgrade ε als die vorstehend genannten in Kauf zu nehmen, wenn dafür die Luftbeständigkeit unter den angestrebten Betriebsbedingungen wirtschaftlich günstig erkauft werden kann. Solche günstig herstellbaren Beschichtungen sind bekannt aus kommerziellen Parabolrinnenanlagen für Betriebstemperaturen bis 300 °C (Fa. SOLERA sunpower), die hauptsächlich für die Erzeugung von Prozesswärme ausgelegt sind, nicht jedoch zur Stromerzeugung. Sie sind aber nicht geeignet für Betriebstemperaturen weit darüber, etwa 400 °C.

Gemäß der US 4,005,698 ist es bekannt, allgemein Oberflächen als breitbandige Wandler für Lichtenergie zur Verfügung zu stellen, die eine dendritenartige Oberflächenbeschaffenheit haben. Hierbei ist es wichtig, dass die Dendriten hinsichtlich ihrer Höhe und ihres Abstandes im Bereich der Wellenlänge oder eines geringzahligen Vielfachen dieser Wellenlänge liegen, um eine optimale Absorption des Lichtes der betreffenden Wellenlänge zu gewäherleisten. Die dendritischen Schichten lassen sich gemäß der US 4,005,698 aus der Gasphase abscheiden.

Gemäß der DE 197 43 428 A1 und der EP 0 015 487 A1 sind thermische Solarkollektoren beschrieben, deren Aufbau grundsätzlich seit langem bekannt ist. Diese weisen immer eine optische Sammeleinheit, beispielsweise in Form eines Parabolspiegels, auf, mit dem die Sonnenstrahlung zentriert wird. Im Sammelzentrum für die Sonnenstrahlung befindet sich ein Medium, welches die Strahlungswärme aufnehmen kann und beispielsweise in einem Zentralrohr geführt wird.

Gemäß der DE 27 25 914 A1 ist beschrieben, dass ein solches Zentralrohr oder eine vergleichbare Sammeleinheit für die Sonnenstrahlung mit einer Beschichtung versehen werden kann, welche die Absorption des Sonnenlichts verbessert. Diese kann beispielsweise aus einer Metallcarbidschicht bestehen, die durch Zerstäubung und Abscheidung der Schichtbestandteile auf dem Zentralrohr erzeugt wird. Die hierbei erreichbaren Werte für die Rauigkeit der Oberfläche der erzeugten Schicht liegen im Nanometerbereich.

Die Aufgabe der Erfindung liegt darin, ein Zentralrohr mit Absorberschicht bzw. ein Verfahren zur Beschichtung dieses Zentralrohres mit einer Absorberschicht anzugeben, mit dem sich ein angemessen hoher Wirkungsgrad des Solarkraftwerks erreichen lässt, wobei die Absorberschicht aber vergleichsweise kostengünstig in der Herstellung sein soll oder niedrige Herstellungskosten der Gesamtkonstruktion ermöglicht, etwa, weil die Absorberschicht luftbeständig ist.

Diese Aufgabe wird mit dem eingangs genannten Verfahren erfindungsgemäß dadurch gelöst, dass die Absorberschicht durch Kaltgasspritzen aufgebracht wird. Bei dem Kaltgasspritzen handelt es sich nämlich vorteilhaft um ein Verfahren, mit dem sich die für thermische Spritzverfahren typischen, vergleichsweise hohen Auftragsraten bzw. Schichtdicken erreichen lassen. Daher ist dieses Verfahren vorteilhaft sehr wirtschaftlich anzuwenden. Andererseits lassen sich mittels Kaltgasspritzen die für elektrochemisch oder aus der Gasphase abgeschiedene oder gesputterte Schichten typischen Wärmeleitfähigkeiten der erzeugten Schichten erreichen, die die Funktionstauglichkeit der Absorberschicht mit bedingen. Allerdings kann vorteilhaft von den gebräuchlichen elektrochemischen oder Gasphasen-Abscheidungsverfahren bzw. dem Sputtern abgesehen werden, da hierbei nur sehr geringe Schichtdicken direkt erzeugbar sind und deswegen der Beschichtungsvorgang mehrfach wiederholt werden müsste, wodurch das Beschichtungsverfahren erheblich verteuert würde. Weiterhin vorteilhaft ist, wenn die Absorberschicht erosionsbeständig gegen Staub, insbesondere Sand ist, da Solarkraftwerke bevorzugt in Gegenden errichtet werden, die auch einen trockenen Boden haben.

Vorzugsweise wird zum Kaltgasspritzen, welches auch als kinetisches Spritzen bezeichnet wird, eine Kaltgasspritzanlage verwendet, die eine Gasheizeinrichtung zum Erhitzen eines Gases aufweist. An die Gasheizeinrichtung wird eine Stagnationskammer angeschlossen, die ausgangsseitig mit einer konvergent-divergenten Düse, vorzugsweise einer Lavaldüse verbunden wird. Konvergent-divergente Düsen weisen einen zusammenlaufenden Teilabschnitt sowie einen sich aufweitenden Teilabschnitt auf, die durch eine Düsenhals verbunden sind. Die konvergent-divergente Düse erzeugt ausgangsseitig einen Pulverstrahl in Form eines Gasstroms mit darin befindlichen Partikeln mit hoher Geschwindigkeit, so dass die kinetische Energie der Partikel ausreicht, damit diese auf der zu beschichtenden Oberfläche haften bleiben.

Gemäß einer vorteilhaften Ausgestaltung der Erfindung ist vorgesehen, dass eine Mehrlagen-Schicht (im Folgenden auch mit dem gebräuchlichen Begriff Multilayer-Schicht bezeichnet) oder eine Gradientenschicht oder mehrere Lagen aus Gradientenschichten, d. h. eine Mehrlagen-Schicht, deren Lagen jeweils wie Gradientenschichten aufgebaut sind, abgeschieden werden. Hierbei können vorteilhaft während des Beschichtens mittels Kaltgasspritzens die Verfahrensparameter abgeändert werden, so dass die Schichten vorteilhaft optimal an das Anforderungsprofil von Absorberschichten angepasst werden kann.

Gemäß einer weiteren Ausgestaltung der Erfindung ist vorgesehen, das Material und/oder den strukturellen Aufbau der Absorberschicht in Umfangsrichtung des Zentralrohres zu variieren, so dass die spektrale Absorptions/Emissions-Charakteristik der Absorberschicht nach Einbau des Absorberrohres beispielsweise in einen Parabolspiegel auf der dem Himmel zugewandten Seite (im Folgenden als Oberseite bezeichnet) des Zentralrohres eine andere ist, als auf der dem Scheitel des durch den Parabolspiegel gebildeten Reflektors zugewandten Seite (im Folgenden als Unterseite bezeichnet). Dadurch kann vorteilhaft die Wirkung der Absorberschicht auf die am Umfang des Zentralrohres ungleichmäßige Temperaturverteilung abgestimmt werden, welche aus der ungleichmäßigen Bestrahlungsintensität resultiert. Die Unterseite des Zentralrohres ist nämlich aufgrund des Einsatzes der Reflektoren stärker konzentriertem Sonnenlicht ausgesetzt als die Oberseite und wird demnach heißer als diese. Da das Zentralrohr vorzugsweise aus Stahl (insbesondere Edelstahl) gefertigt ist, kann die ungleichmäßige Erhitzung nämlich nur teilweise durch Wärmeleitung innerhalb der Rohrwandung längs des Umfangs ausgeglichen werden. Das erfindungsgemäße Beschichten durch Kaltgasspritzen erfolgt prinzipbedingt lokal immer nur an der Autreffstelle des Kaltgasstrahls. Dies ermöglicht es vorteilhaft, die oben genannte Variation der Absorberschicht zwischen Oberseite und Unterseite des Zentralrohres einfach durch Änderung der Beschichtungsparameter und/oder Wechsel des Spritzpulvers einzustellen, im Gegensatz zu elektrochemisch oder aus der Gasphase abgeschiedenen Schichten nach dem Stand der Technik. Besonders vorteilhaft für die Großserienfertigung ist es, mehrere Kaltgasspritzdüsen gleichzeitig zu verwenden und mit jeder unter Anwendung unterschiedlicher Prozessparameter und/oder Beschichtungspulver die gewünschten Zonen am Umfang des Zentralrohres herzustellen.

Die oben beschriebene Variation der Schichteigenschaften zwischen einer Ober- und einer Unterseite ist nur beispielhaft. Bei anderen Reflektorformen oder Bauweisen können sich andere Gestalten längs am Umfangs unregelmäßiger Bestrahlungsintensität und/oder Temperatur einstellen, an welche die spektrale Absorptions/Emissions-Charakteristik der Absorberschicht aufgrund des erfindungsgemäßen Verfahrens besonders einfach angepasst werden kann.

Gemäß einer weiteren Ausgestaltung der Erfindung ist vorgesehen, das Material und/oder den strukturellen Aufbau der Absorberschicht (auch) in Längsrichtung des Zentralrohres zu variieren. Dieses wird nämlich in einigen gängigen Bauformen linear konzentrierender Solarkraftwerke von einer Flüssigkeit durchströmt, welche dadurch erwärmt wird. In Strömungsrichtung nimmt die Temperatur dieser Flüssigkeit daher kontinuierlich zu, so dass sie im zuletzt durchströmten Rohrabschnitt stationär wärmer ist als im zuerst durchströmten Rohrabschnitt. Je nach Wandstärke des Zentralrohres beeinflusst die Flüssigkeitstemperatur die Temperatur der Absorberschicht, selbst wenn die Bestrahlungsintensität in Längsrichtung des Rohres gleichmäßig ist. Auch die Absorberschicht ist dann im zuletzt durchströmten Rohrabschnitt stationär wärmer ist als im zuerst durchströmten Rohrabschnitt. Mit zunehmender Temperatur der Absorberschicht wächst die nutzlos abgestrahlte Wärmeleistung gemäß dem Stefan-Boltzmann-Gesetz. Die erfindungsgemäße Beschichtung durch Kaltgasspritzen ermöglicht hier vorteilhaft, mit einfachen Mitteln die spektrale Absorptions/Emissions-Charakteristik der Absorberschicht in Längsrichtung des Rohres so zu variieren, dass im zuerst durchströmten, kühleren Rohrabschnitt der Absorptionsgrad auf Kosten der Emissivität gesteigert werden kann, während im zuletzt durchströmten, heißen Abschnitt die Emissivität auf Kosten des Absorptionsgrads gesenkt werden kann.

Es ist möglich, die Beschichtungen aus Wolfram, Molybdän, Nickel, Nickel-Zinn, Bronze, Kupfer, Messing, Zink, Eisen, Stahl, Kobalt, Chrom, Aluminium, Silber oder Mischungen dieser Metalle herzustellen. Gemäß einer weiteren Ausgestaltung enthält eine wie oben beschrieben ausgebildete Beschichtung zusätzlich einen oder mehrere der folgenden Stoffe: Aluminiumnitrid; Bleisulfid; Silizium; Germanium; ein Oxid oder mehrere Oxide von Wolfram, Molybdän, Nickel, Kupfer, Zink, Eisen, Kobalt, Chrom, Aluminium, Mangan oder Silizium; ein Karbid oder mehrere Karbide oder ein Silizid oder mehrere Silizide von Wolfram, Molybdän, Tantal, Eisen, Chrom oder Titan. Die Beschichtungen können mit Rauheiten von 0,5 bis 6 µm hergestellt werden. Diese Rauheit schließt nicht aus, dass die Oberfläche der Absorberschicht gleichzeitig eine gröbere Topologie der Oberfläche aufweist, die der Rauheit überlagert ist (beispielsweise Kaltspritz-Bahnen, die durch das Führen des Kaltgasstrahles über die zu beschichtende Oberfläche zu Stande kommen).

Unter Rauheit im Sinne dieser Erfindung soll ein Maß verstanden werden, welches den jeweiligen Abstand der oberen Scheitelpunkte der betrachteten, die Rauhigkeit erzeugenden Erhebungen beschreibt. Hierbei ist auf Erhebungen mit jeweils ähnlichen geometrischen Abmessungen abzustellen, wobei sich im Oberflächenprofil auch Erhebungen unterschiedlicher Ordnung, d. h. mit geometrisch nicht ähnlichen Abmessungen überlagern können. Bespielsweise können größere Erhebungen Erhebungen mit jeweiligen Abständen von 6 µm zueinander und kleinere Erhebungen mit Abständen von 0,5 µm zueinander vorgesehen sein.

Die Rauheit bei Vorliegen von Erhebungen unterschiedlicher Ordnung lässt sich wie nachfolgend ausgeführt messen. Es werden auf einem Arial von beispielsweise 50 µm Durchmesser verteilt Höhenwerte für die Oberfläche gemessen. Mit diesen lässt sich die quadratische Rauheit ermitteln. Die sogenannte quadratische Rauheit (englisch rms-roughness = root-mean-squared roughness: Wurzel des Mittelquadrates) wird aus dem Mittel der Abweichungsquadrate berechnet und entspricht dem quadratischen Mittel der Abweichungen der Höhenwerte.

Die Rauheit bei Vorliegen von Erhebungen unterschiedlicher Ordnung lässt sich alternativ auch wie nachfolgend ausgeführt messen. Die Erhebungen und Vertiefungen der Absorberschichtoberfläche S sind folgendermaßen zufällig verteilt: Es sei F ein Flächenausschnitt von S, der als Quadrat mit einer Kantenlänge von 50 x 50 µm festgelegt wird. Die Größe ist so gewählt, dass Perioden länger als 141 µm (die doppelte Quadratdiagonale) von der Messung nicht erfasst werden können. Welligkeiten wegen der einzelnen Kaltgasspritz-Bahnen, die wegen des gewählten Beschichtungsverfahrens nur schwer oder gar nicht vermeidbar sind, sind damit sozusagen unsichtbar. 50 µm sind aber groß genug, um kleine Vielfache der Nahinfrarot-Wellenlängen noch zu sehen.

A sei eine toroidale Ausgleichsfläche, welche innerhalb von F den mittleren räumlichen Flächenverlauf von S darstellt. Diese besteht aus einem Ausschnitt aus einem Kreisring, der sich gut an F anpassen lässt, wobei hierbei beispielsweise die Krümmung des Zentralrohres Berücksichtigung finden kann. Die Projektion F' von F auf A ist einfach zusammenhängend, viereckig, rechtwinklig und gleichseitig (sozusagen ein nicht ebenes Quadrat) mit 50 µm Kantenlänge. Die Höhe (bzw. Tiefe) H von S in einem Punkt P von F sei der gerichtete räumliche Abstand von P zu A. H ist dann eine um Null fluktuierende Funktion über F' und sei außerhalb von F' periodisch fortgesetzt. Das zweidimensionale Fourier-Spektrum von H weist dann für keine der Ortsfrequenzen, die Perioden größer als 6 µm entsprechen, Amplituden auf, welche größer sind als die größte Amplitude der Ortsfrequenzen, die Perioden kleiner als 6 µm entsprechen. Dies kann für jeden Ausschnitt F von S gemessen werden.

Das erläuterte Messergebnis lässt sich auch folgendermaßen beschreiben. Abstände größer als 6 µm zwischen Erhebungen sind statistisch so selten, dass sie keine Rolle spielen. Damit ist der überwiegende Anteil der Strukturen lateral höchstens so groß wie diejenigen Nahinfrarot-Wellenlängen, welche den größten Teil der Intensität von Schwarzkörperstrahlung bei Temperaturen von 500°C ausmachen.

Kaltgasgespritzte Oberflächen mit dieser Rauheit können im solaren Wellenlängenbereich diffus reflektieren und gut absorbieren, im Nahinfrarot reflektieren sie jedoch spiegelnd, sie verhalten sich gegenüber der Wärmeabstrahlung bei Betriebstemperaturen bis 500°C also wie glatte Flächen. Das heißt, ihre Rauheit bewirkt vorteilhaft keine Vergrößerung der effektiven Emissionsfläche und also keine Vergrößerung der nutzlos abgestrahlten Leistung. Diese Rauheit lässt sich durch Kaltgasspritzen mit besonders geeignetem Spritzpulver herstellen.

Geeignet sind Spritzpulver, welche überwiegend Partikel etwa in der Größe der angestrebten Rauheit enthalten, wobei ihre Verformung beim Auftreffen auf die Oberfläche berücksichtigt werden muss. Daher sollten sie kleiner als 10 µm im mittleren Durchmesser sein. Alternativ oder ergänzend dazu kann das Spritzpulver signifikante Massenanteile von Partikeln enthalten, die nicht sphärisch sind, sondern unregelmäßige Formen mit Ecken und Kanten aufweisen. Solche Partikel können auch größer als 10 µm sein, denn ihre Ecken und Kanten erzeugen nach dem Spritzen die Rauheit der Schichtoberfläche. Während sphärische Partikel oft durch Gasverdüsen hergestellt werden, sind geeignete unregelmäßige Partikel im kommerziellen Maßstab zum Beispiel durch Wasserverdüsen, Sintern und Zerkleinern oder durch elektrolytische Fällung herstellbar. Die unregelmäßige Form dieser Partikel kann nicht nur die Einstellung der angestrebten Rauheit der Absorberschichtoberfläche erleichtern, sondern begünstigt auch grundsätzlich den Kaltgasspritzprozess selbst, weil solche Partikel in der Spritzdüse für das Kaltgasspritzen stärker beschleunigt werden als sphärische Partikel mit desselben Masse. Dies ist hier insbesondere von Bedeutung, weil viele der erfindungsgemäßen Pulvermaterialien ein hohes bis sehr hohes spezifisches Gewicht haben, allen voran Wolfram und Wolframkarbid. Infolge ihrer höheren Geschwindigkeit ergeben unregelmäßige Partikel ein festeres Schichtgefüge als gleich schwere sphärische Partikel.

Falls sich die optimale Rauheit von 0,5 bis 6 µm nicht abschließend durch den Abscheideprozess herstellen lässt, kann sie auch durch eine Oberflächennachbehandlung, zum Beispiel Sandstrahlen oder chemisches Ätzen, verbessert werden.

Erfindungsgemäß unter den oben erläuterten Beschichtungen sind Absorberschichten aus korrosionsbeständigem Wolframkarbid-haltigem Hartmetall, insbesondere WC-CoCr, WC-Co, WC-FeCo, WC-FeC, WC-FeNi, WC-Ni oder WC-NiCr. Diese sind nicht nur bei Temperaturen über 500°C lange luftbeständig sondern auch außerordentlich erosionsbeständig und können gut durch Kaltgasspritzen mit kommerziell verfügbarem, feinem und unregelmäßig geformtem Pulver hergestellt werden.

Die Schichten mit oxidischen Bestandteilen können dabei durch Vermischung von Metallpulvern mit Oxidpulvern durch Kaltgasspritzen abgeschieden werden, wobei das Pulvergemisch der Kaltgasspritzdüse zugeführt wird. Eine andere Möglichkeit besteht in der Anwendung eines reaktiven Kaltgasspritzverfahrens, bei dem eine Oxidation der Pulverteilchen zumindest an den Oberflächen dadurch erfolgt, dass ein Reaktivgas dem Kaltgasstrahl zugemischt wird. Eine solche Reaktion kann zusätzlich durch Aktivierung beispielsweise durch Mikrowellenstrahlung oder mittels eines Lasers unterstützt werden. Außerdem ist es auch möglich, mittels Kaltgasspritzen zunächst metallische Schichten abzuscheiden und diese in einem getrennten Verfahrensschritt zu oxidieren.

Gemäß einer anderen Ausgestaltung der Erfindung ist vorgesehen, dass die Verfahrensparameter beim Erzeugen des substratnahen Bereichs der Absorberschicht so gewählt werden, dass ein zumindest weitgehend porenfreier Schichtaufbau erfolgt. Hierdurch kann vorteilhaft erreicht werden, dass die Wärmeleitfähigkeit der erzeugten Schicht bis auf den unmittelbaren Oberflächenbereich vorteilhaft verbessert wird. Mit dem Kaltgasspritzen lassen sich nämlich fast porenfreie Schichten herstellen, wobei die Verfahrensparameter, die zur Erzeugung von porenfreien Schichten führen, vorteilhaft auch eine besonders starke Haftung der erzeugten Schicht auf dem Substrat bewirken. Diese Haftung ist wegen der großen Zahl an Thermozyklen (zwischen Tag und Nacht) bei gleichzeitig großem Temperaturhub, der für linear konzentrierende solarthermische Kraftwerke charakteristisch ist, zuträglich. Das Kaltgasspritzen hat dabei zudem den Vorteil, dass die erzeugten Schichten kaum mechanische Eigenspannungen enthalten, die die Schicht zusätzlich zu den Temperaturzyklen belasten würden.

Weiterhin wird die oben angegebene Aufgabe durch ein Zentralrohr für ein linear konzentrierendes solarthermisches Kraftwerk mit einer Absorberschicht gelöst, die aus korrosionsbeständigem Wolframkarbid-haltigem Hartmetall, insbesondere WC-CoCr, WC-Co, WC-FeCo, WC-FeC, WC-FeNi, WC-Ni oder WC-NiCr, besteht, wobei diese Absorberschicht eine Rauheit von 0,5 bis 6 µm aufweist, deren Oberflächenprofil durch ein zweidimensionales Fourier-Spektrum der ortsabhängigen Höhelage H der Oberfläche beschreibbar ist, das für keine der Ortsfrequenzen, die Perioden größer als 6 µm und kleiner höchstens 50 µm entsprechen, Amplituden aufweist, welche größer sind als die größte Amplitude der Ortsfrequenzen, die Perioden kleiner als 6 µm entsprechen. Diese Oberflächenrauhigkeit lässt sich vorteilhaft mit dem oben angegebenen Kaltgasspritzen erzeugen und führt zu einer Optimierung des Emissionsverhaltens der Absorberschicht.

Gemäß einer Ausgestaltung des Zentralrohres ist vorgesehen, dass dieses einen solaren Absorptionsgrad von α > 85% und einen thermischen Emissionsgrad ε < 15% aufweist. Dies ist zum einen durch die Oberflächenrauheit der erzeugten Absorberschicht und zum anderen durch die bereits aufgeführte Materialwahl erreichbar.

Weitere Einzelheiten der Erfindung werden nachfolgend anhand der Zeichnung beschrieben. Gleiche oder sich entsprechende Zeichnungselemente sind in den einzelnen Figuren mit jeweils den gleichen Bezugszeichen versehen und werden nur insoweit mehrfach erläutert, wie sich Unterschiede zwischen den einzelnen Figuren ergeben. Es zeigen
- Figur 1: einen Schnitt durch einen Teilabschnitt des erfindungsgemäßen Absorberrohres als Ausführungsbeispiel der Erfindung, hergestellt durch Kaltgasspritzen und
- Figur 2: einen stark vergrößerten, idealisierten Oberflächenausschnitt eines Ausführungsbeispiels der Absorberoberfläche in dreidimensionaler Ansicht.

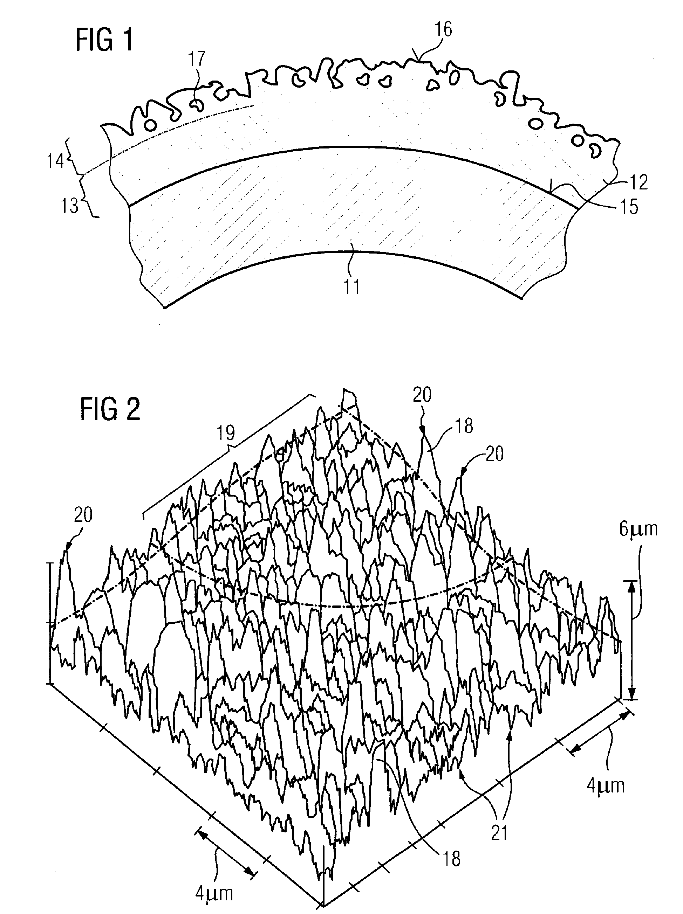

Gemäß der Figur 1 besteht ein Zentralrohr 11 für ein Parabolrinnenkraftwerk beispielsweise aus Stahl. Auf diesem ist eine Absorberschicht 12 aufgebracht, die als Mehrlagen-Schicht ausgeführt ist. Diese weist eine Lage 13 auf, die mit anderen Verfahrensparametern hergestellt wurde als die Lage 14. Die Lage 13 sitzt auf der Oberfläche 15 des Absorberrohres 11 und weist eine porenfreie Struktur mit guter Haftung auf der Oberfläche 15 auf. Die Lage 14 ist der die Oberfläche 16 der Absorberschicht 12 bildende Teil dieser Schicht. Durch andere Verfahrensparameter beim Kaltgasspritzen entsteht ein etwas lockererer Schichtaufbau mit Poren 17, wobei die verspritzten Partikel durch einen geringeren Energieeintrag weniger verformt werden. Insbesondere bleibt ihre Oberflächenstruktur fast vollständig erhalten, welche eine niedrige Emissivität im Nahinfrarot aufweist.

Ein Ausschnitt der so erzeugten Oberfläche ist in Figur 2 zu erkennen. Um eine Vorstellung der Dimensionen von Erhebungen 18 zu vermitteln, die durch die Oberflächenstruktur der verspritzten Partikel erzeugt wird, sind in Figur 2 Längeneinheiten in µm angegeben. Weiterhin ist zu erkennen, dass neben der durch die Erhebung 18 gebildeten Rauheit auch eine Rauhigkeit mit einem größeren Maßstab erzeugt wird, die durch das Auftreffen einzelner Partikel entsteht. Dies ist durch strichpunktierte Linien angedeutet, wobei die in der perspektivischen Ansicht hinterste Ecke des dargestellten Ausschnittes sozusagen den Mittelpunkt eines Hügels 19 bildet, der durch ein einzelnes sehr großes auftreffendes Partikel gebildet wurde. Die Rauhigkeit in den Dimensionen der Partikel ist auch in Figur 1 angedeutet.

In Figur 2 wird auch deutlich, dass die Erhebungen 18 jeweils Scheitelpunkte 20 aufweisen, wobei die Rauheit dahingehend verstanden wird, dass diese Scheitelpunkte 20 zu benachbarten Scheitelpunkten 20 jeweils Abstände zwischen 0,5 und 6 µm aufweisen. Gleichzeitig wird deutlich, dass sich das Niveau der Scheitelpunkte 20 und das Niveau von den Tiefstpunkten 21 der Vertiefungen ebenfalls in einer Größenordnung von 1 bis 4 µm bewegen.

## Patentansprüche

1. Verfahren zum Aufbringen einer Absorberschicht (12) auf ein Zentralrohr (11) für ein linear konzentrierendes solarthermisches Kraftwerk,
**dadurch gekennzeichnet, dass** die Absorberschicht (12) durch Kaltgasspritzen aufgebracht wird, wobei als Material korrosionsbeständiges Wolframkarbidhaltiges Hartmetall, insbesondere WC-CoCr, WC-Co, WC-FeCo, WC-FeC, WC-FeNi, WC-Ni oder WC-NiCr, abgeschieden wird.

2. Verfahren nach Anspruch 1,
**dadurch gekennzeichnet, dass** die Oberfläche der Absorberschicht (12) mit einer quadratischen Rauheit von höchstens 1 µm, gemessen in einem Nahbereich von höchstens 50 µm Durchmesser, hergestellt wird.

3. Verfahren nach einem der voranstehenden Ansprüche, **dadurch gekennzeichnet, dass** eine Mehrlagen-Schicht oder eine Gradientenschicht oder eine Mehrlagen-Schicht aus Gradientenlagen abgeschieden wird.

4. Verfahren nach einem der voranstehenden Ansprüche, **dadurch gekennzeichnet, dass** die Verfahrensparameter beim Erzeugen des substratnahen Bereiches der Absorberschicht (11) so gewählt werden, dass ein zumindest weitgehend porenfreier Schichtaufbau erfolgt.

5. Verfahren nach einem der voranstehenden Ansprüche, **dadurch gekennzeichnet, dass** die Verfahrensparameter und/oder die Partikel zur Beschichtung beim Erzeugen der Schicht auf dem Zentralrohr in Umfangsrichtung und/oder in Längsrichtung des Zentralrohres unterschiedlich variiert werden.

6. Zentralrohr für ein linear konzentrierendes solarthermisches Kraftwerk mit einer Absorberschicht,
**dadurch gekennzeichnet, dass** diese eine aus korrosionsbeständigem Wolframkarbid-haltigem Hartmetall, insbesondere WC-CoCr, WC-Co, WC-FeCo, WC-FeC, WC-FeNi, WC-Ni oder WC-NiCr, besteht, wobei die Absorberschicht eine Rauigkeit zwischen 0,5 und 6 µm aufweist, deren Oberflächenprofil durch ein zweidimensionales Fourier-Spektrum der ortsabhängigen Höhelage H der Oberfläche beschreibbar ist, das für keine der Ortsfrequenzen, die Perioden größer als 6 µm und kleiner höchstens 50 µm entsprechen, Amplituden aufweist, welche größer sind als die größte Amplitude der Ortsfrequenzen, die Perioden kleiner als 6 µm entsprechen.

7. Zentralrohr nach Anspruch 6,
**dadurch gekennzeichnet, dass** die Oberfläche der Absorberschicht (12) eine quadratische Rauheit von höchstens 1 µm, gemessen in einem Nahbereich von höchstens 50 µm Durchmesser, aufweist.

8. Zentralrohr (11) nach einem der Ansprüche 6 bis 7, **dadurch gekennzeichnet, dass** dieses einen solaren Absorptionsgrad α > 85% und einen thermischen Emissionsgrad ε < 15% bei mindestens 400°C aufweist.

9. Zentralrohr (11) nach einem der Ansprüche 6 bis 8, **dadurch gekennzeichnet, dass** das Material und/oder der strukturellen Aufbau der Absorberschicht (12) in Umfangsrichtung und/oder in Längsrichtung des Zentralrohres (11) unterschiedlich ist.

10. Zentralrohr nach Anspruch 9,
**dadurch gekennzeichnet, dass** die Absorptions- und Emissions-Charakteristik der Absorberschicht (12) in Umfangsrichtung und/oder in Längsrichtung des Zentralrohres (11) unterschiedlich ist.

## Claims

1. Method for applying an absorber layer (12) onto a central tube (11) for a linear concentrating solar thermal power plant, **characterized in that** the absorber layer (12) is applied by cold gas spraying, the material which is deposited being corrosion-resistant tungsten-carbide-based hard metal, in particular WC-CoCr, WC-Co, WC-FeCo, WC-FeC, WC-FeNi, WC-Ni or WC-NiCr.

2. Method according to Claim 1, **characterized in that** the surface of the absorber layer (12) is produced with a root-mean-squared roughness of at most 1 µm, measured in a near range of at most 50 µm in diameter.

3. Method according to one of the preceding claims, **characterized in that** a multi-ply layer or a gradient layer or a multi-ply layer of gradient plies is deposited.

4. Method according to one of the preceding claims, **characterized in that** the method parameters when producing that region of the absorber layer (11) which is near to the substrate are selected such that an at least substantially pore-free layer construction results.

5. Method according to one of the preceding claims, **characterized in that** the method parameters and/or the particles for coating during the production of the layer on the central tube are varied differently in the circumferential direction and/or in the longitudinal direction of the central tube.

6. Central tube for a linear concentrating solar thermal power plant having, **characterized in that** the absorber layer is composed of a corrosion-resistant tungsten-carbide-based hard metal, in particular an absorber layer WC-CoCr, WC-Co, WC-FeCo, WC-FeC, WC-FeNi, WC-Ni or WC-NiCr, the absorber layer having a roughness of between 0.5 and 6 µm, the surface profile of which can be described by a two-dimensional Fourier spectrum of the location-dependent height position H of the surface, which has amplitudes which are greater than the maximum amplitude of the spatial frequencies which correspond to periods of less than 6 µm for none of the spatial frequencies which correspond to periods of greater than 6 µm and less than at most 50 µm.

7. Central tube according to Claim 6, **characterized in that** the surface of the absorber layer (12) has a root-mean-squared roughness of at most 1 µm, measured in a near range of at most 50 µm in diameter.

8. Central tube (11) according to one of Claims 6 to 7, **characterized in that** the central tube has a solar absorptivity α > 0.85 and a thermal emissivity ε < 0.15 at at least 400°C.

9. Central tube (11) according to one of Claims 6 to 8, **characterized in that** the material and/or the structural design of the absorber layer (12) is different in the circumferential direction and/or in the longitudinal direction of the central tube (11).

10. Central tube according to Claim 9, **characterized in that** the absorption and emission characteristic of the absorber layer (12) is different in the circumferential direction and/or in the longitudinal direction of the central tube (11).

## Revendications

1. Procédé de dépôt d'une couche ( 12 ) d'absorbant sur un tube (11) central pour une centrale thermique solaire à focalisation linéaire,
**caractérisé en ce que** l'on dépose la couche ( 12 ) d'absorbant par pulvérisation à gaz froid, en déposant, comme matériau, du métal dur résistant à la corrosion et contenant du carbure de tungstène, notamment WC-CoCr, WC-Co, WC-FeCo, WC-FeC, WC-FeNi, WC-Ni ou WC-NiCr.

2. Procédé suivant la revendication 1,
**caractérisé en ce que** l'on donne à la surface de la couche ( 12 ) d'absorbant une rugosité carrée de 1 µm au plus, mesurée dans une zone proche d'au plus 50 µm de diamètre.

3. Procédé suivant l'une des revendications précédentes, **caractérisé en ce que** l'on dépose une couche en plusieurs strates ou une couche à gradient ou une couche à plusieurs strates composées de strates à gradient.

4. Procédé suivant l'une des revendications précédentes, **caractérisé en ce que** l'on choisit les paramètres du procédé lors de la production de la zone proche du substrat de la couche ( 11 ) d'absorbant, de manière à obtenir une structure de couche, au moins dans une grande mesure, sans pores.

5. Procédé suivant l'une des revendications précédentes, **caractérisé en ce que** l'on fait varier différemment, dans la direction périphérique et/ou dans la direction longitudinale du tube central, les paramètres du procédé et/ou les particules de revêtement lors de la production de la couche sur le tube central.

6. Tube central pour une centrale thermique solaire à focalisation linéaire ayant une couche d'absorbant, **caractérisé en ce que** celle-ci est constituée d'un métal dur résistant à la corrosion et contenant du carbure de tungstène, notamment de WC-CoCr, WC-Co, WC-FeCo, WC-FeC, WC-FeNi, WC-Ni ou WC-NiCr, la couche d'absorbant ayant une rugosité comprise entre 0,5 et 6 µm, dont le profil de surface peut être décrit par un spectre de Fourier en deux dimensions de la position H en hauteur de la surface, en fonction du lieu, qui, pour aucune des fréquences de lieu, qui correspondent à des périodes plus grandes que 6 µm et plus petites qu'au plus 50 µm, a des amplitudes qui sont plus grandes que l'amplitude la plus grande des fréquences de lieu, qui correspondent à des périodes plus petites que 6 µm.

7. Tube central suivant la revendication 6,
**caractérisé en ce que** la surface de la couche (12) d'absorbant a une rugosité carrée d'au plus 1 µm, mesurée dans une zone proche d'au plus 50 µm de diamètre.

8. Tube ( 11 ) central suivant l'une des revendications 6 à 7, **caractérisé en ce qu'**il a un degré α d'absorption solaire plus grand que 85% et un degré ε d'émission thermique plus petit que 15% à au moins 400°C.

9. Tube ( 11 ) central suivant l'une des revendications 6 à 8, caractérisé en ce le matériau et/ou la constitution structurelle de la couche ( 12 ) d'absorbant est différent dans la directement périphérique et/ou dans la direction longitudinale du tube ( 11 ) central.

10. Tube central suivant la revendication 9,
**caractérisé en ce que** la caractéristique d'absorption et la caractéristique d'émission de la couche ( 12 ) d'absorbant sont différentes dans la direction périphérique et/ou dans la direction longitudinale du tube ( 11 ) central.
